# NOUVEAU FASCICULE DE BREVET EUROPEEN

(11) **EP 0 421 974 B2**
(45) Date de publication et mention de la décision concernant l'opposition: **27.01.1999**
(45) Mention de la délivrance du brevet: 12.01.1994
(21) Numéro de dépôt: 90870165.9
(22) Date de dépôt: 04.10.1990
(51) Int. Cl.: C07C 409/26

(54) **Compositions d'acide peracétique et procédé pour obtenir ces compositions**
Peressigsäure Kompositionen und Verfahren zum Erhalten von diesen Kompositionen
Peracetic acid compositions and process for obtaining these compositions

(30) Priorité: 05.10.1989 BE 8901066
(43) Date de publication de la demande: 10.04.1991
(73) Titulaire: SOLVAY INTEROX (Société Anonyme), B-1050 Bruxelles (BE)
(72) Inventeur: Colery, Jean-Claude, B-1302 Chaumont-Gistoux (BE); Ledoux, Pierre, B-1200 Bruxelles (BE)
(74) Mandataire: Meyers, Liliane

(56) Documents cités:
- EP-A- 252 278
- EP-A- 2 265 979
- WO-A-88/08667
- DE-A- 2 451 904
- FR-A- 2 321 302
- GB-A- 906 971
- GB-A- 1 535 804
- US-A- 3 168 554
- US-A- 4 017 411
- Research Disclosure, May 1989, no. 30115, voir aussi Derwent Publications AN 89-184199
- Römpps Chemielexikon, 7, 1977, colonne de droite "Verdickungsmittel"
- Pharmazie, vol. 31, 1976, p.117-120, H. Kühn et al
- Dictionnaire CFTA, 3rd ed., p. 40-41
- Dictionnaire CFTA, 5th ed., 1993, p. 92-93
- Organic Peroxides, vol. 3, chapitre V, p. 341-344, E.S. SHANLEY "Organic Peroxides: Evaluation and Management of Hazards", Wiley Interscience, John Wiley & Sons, New York, US, 1972
- Das Wasserperoxyd und die Perverbindungen, Springer, Wien, 1937, chapitre XVI, p. 185-194, W. MACHU: "Das Haltbarmachen oder Stabilisieren von Wasserperoxydlösungen oder dessen Derivaten"
- Am. Chem. Society, Mongraph Series, Reinhold Publishing Corporation, New York, US, 1955, chapitre 9, p. 515-547, W.C. SCHUMB et al:"Stabilization"

## Description

La présente invention concerne des compositions d'acide peracétique.

La demande de brevet européen EP 252278 décrit des compositions d'acide peracétique contenant un composé phénolique utilisé à titre de microbicide et facultativement un agent complexant ainsi qu'un agent épaississant.

L'acide peracétique est un composé peroxydé qui peut connaître des utilisations analogues à celles du peroxyde d'hydrogène, notamment comme agent de blanchiment, de désinfection ou de stérilisation, par libération d'oxygène actif.

Particulièrement à basse température, l'acide peracétique se révèle même plus actif que le peroxyde d'hydrogène, ce qui en rend l'usage spécialement intéressant dans certaines applications de désinfection, de détergence ou de blanchiment.

Toutefois, son utilisation est rendue difficile dans certains cas par sa trop grande fluidité comparable à celle de l'eau. Ainsi en est-il notamment dans les traitements oxydants et bactéricides de surfaces non horizontales ou de volumes importants difficilement immersibles en cuve.

En vue d'élargir son champ d'application, il apparait donc souhaitable de pouvoir le présenter sous une forme qui permette notamment une application localisée avec un écoulement limité du fluide et qui offre une stabilité suffisante au stockage et à la manipulation.

Un autre inconvénient de l'acide peracétique résulte du fait qu'il est susceptible de réversion en acide acétique et peroxyde d'hydrogène, en présence d'eau. Ce phénomène, déjà présent au stockage, est particulièrement important lors de sa dilution.

Pour maintenir les avantages qui découlent du choix de l'acide peracétique plutôt que du peroxyde d'hydrogène, il est donc important que la vitesse de réversion soit la plus faible possible au stockage et à la manipulation.

Enfin, au stockage et à la manipulation de l'acide peracétique, on peut craindre une diminution de sa teneur en oxygène actif.

La présente invention a pour but de fournir des compositions d'acide peracétique peu fluides, stables au stockage et à la manipulation et qui se présentent sous forme suffisamment homogène pour éviter des différences de consistance et des phénomènes de ségrégation.

A cet effet, l'invention concerne des compositions d'acide peracétique qui contiennent au moins un agent épaississant, au moins un stabilisant choisi parmi les agents séquestrants et au moins un stabilisant choisi parmi les capteurs de radicaux libres.

Divers agents épaississants peuvent être utilisés à cet effet. Ils sont en général choisis parmi les polymères et copolymères de monomères acryliques, leurs dérivés et les mélanges contenant deux ou plus de ces produits. En particulier, les polymères et copolymères de l'acide acrylique et leurs dérivés peuvent être avantageusement choisis. Leur polymérisation peut être réalisée in situ ou au préalable. On obtient de bons résultats avec des polymères préalablement préparés.

Les meilleurs résultats ont été obtenus avec des polymères de l'acide acrylique réticulés. Comme agents réticulants, divers dérivés de polysaccharides peuvent être valablement utilisés. En particulier, le sucrose ou le pentaérythritol substitués par plusieurs groupes allyles peuvent être avantageusement choisis.

En pratique, d'excellents résultats sont obtenus avec un polymère de l'acide acrylique réticulé avec un polyallyle sucrose, commercialisé par la firme B.F. GOODRICH CHEMICAL sous la marque CARBOPOL 934.

Les compositions épaissies selon l'invention ne sont en général pas neutralisées.

En général, les compositions selon l'invention contiennent au moins 0,05 % en poids d'un ou plusieurs agents épaississants. Le plus souvent, cette concentration ne dépasse pas 10 %. Les teneurs préférées vont de 0,1 a 6 % en poids d'un ou plusieurs agents épaississants.

En pratique, les compositions contenant un agent épaississant selon l'invention présentent généralement une fluidité qui se caractérise par un indice Matthis ne dépassant pas 25 cm/10 s. Les compositions peuvent éventuellement se présenter sous forme gélifiée. Elles peuvent avoir un indice Matthis égal à 0 cm/10 s.

L'indice Matthis est mesuré par le fluidimètre du même nom, dont l'utilisation s'est avérée particulièrement commode en l'espèce. Le fluidimètre Matthis se compose d'une règle graduée comportant, à l'une de ses extrémités, une cavité en forme de calotte sphérique d'une profondeur de 5,2 mm, le rayon de la sphère étant de 8 mm. Une rainure graduée part de 5 mm au-dessous du bord de la cavité pour atteindre 15 mm plus loin sa profondeur définitive de 2,6 mm. Cette rainure a un profil en U. La règle étant horizontale, on remplit la cavité du fluide à étudier et on expulse, par simple ratissage, la calotte du ménisque convexe qui s'est formé. Ensuite, on dresse verticalement l'appareil et on lit, après 10 secondes, la distance parcourue par le fluide.

Les compositions épaissies selon l'invention sont également stabilisées.

Par compositions stabilisées, on entend des compositions dont la forme épaissie et la teneur en oxygène actif sont essentiellement maintenues au terme d'un stockage de longue durée à température ambiante.

Les compositions épaissies selon l'invention contiennent en outre au moins un stabilisant choisi parmi les agents séquestrants et au moins un stabilisant choisi parmi les capteurs de radicaux libres butylhydroxytoluènes et les mélanges contenant deux ou plus de ces produits.

Beaucoup d'agents séquestrants connus peuvent être employés pour stabiliser les compositions épaissies selon l'invention. En général, ils peuvent être choisis parmi les acides carboxyliques azotés, les acides hydroxyaminocarboxyliques, hydroxycarboxyliques ou phosphoniques, leurs dérivés et les mélanges contenant deux ou plus de ces produits.

Divers acides carboxyliques azotés ou leurs dérivés peuvent être valablement utilisés. Par acides carboxyliques azotés, on entend désigner les acides aminocarboxyliques et les acides carboxyliques comportant un hétérocycle azoté dans leur structure. En particulier, de bons résultats sont obtenus avec l'acide dipicolinique.

Divers acides hydroxyaminocarboxyliques ou leurs dérivés peuvent être valablement utilisés. En particulier, l'acide 1,3-diamine-2-hydroxypropane-tétracétique peut être avantageusement choisi.

Divers acides hydroxycarboxyliques ou leurs dérivés peuvent être valablement utilisés. En particulier, le poly-alpha-hydroxyacrylate de sodium (brevet Luxembourg 74434, SOLVAY & Cie) ou les agents mentionnés dans les demandes de brevet Allemagne Fédérale 1.904.940, 1.904.941, 1.942.556 de HASCHKE peuvent être avantageusement choisis.

Les acides phosphoniques et leurs dérivés donnent également de très bons résultats. Parmi ceux-ci, on choisit avantageusement les acides alkylidène-polyphosphoniques et/ou les acides polyalkylènes-phosphoniques ou leurs dérivés. En particulier, on peut utiliser les acides hexaméthylène diamine tétra (méthylène phosphonique), diéthylène triamine penta (méthylène phosphonique), triéthylène tétramine hexa (méthylène phosphonique), tétraéthylène pentamine hepta (méthylène phosphonique), pentaétbylène hexamine octa (méthylène phosphonique) ou leurs dérivés. En pratique, d'excellents résultats sont obtenus avec l'acide diéthylène-triamine-penta(méthylène-phosphonique).

Le plus souvent, les agents séquestrants sont choisis parmi les acides phosphoniques, les acides carboxyliques azotés, leurs dérivés et les mélanges contenant deux ou plus de ces produits.

Les capteurs de radicaux libres butylhydroxytoluènes qui donnent de bons résultats sont le 2,6- ou le 3,5-bis-tertiobutyl-4-méthylphénol.

Afin de garantir la stabilité des compositions épaissies d'acide peracétique, on veille à ce qu'elles soient substantiellement exemptes de chlorures. On entend par là que leur teneur en chlorures ne dépasse pas 5 et de préférence 2 mg (d'ions chlore) par kg de composition. Pour ce faire, on veille à ce que la dose de stabilisant et sa teneur en chlorures soient telles que ces limites ne soient pas dépassées.

Les compositions selon l'invention peuvent en outre contenir un ou plusieurs autres stabilisants ainsi qu'un ou plusieurs autres agents épaississants.

L'invention concerne toute qualité d'acide peracétique. En général, l'acide peracétique se présente sous forme de solution et ces solutions contiennent outre l'acide peracétique, notamment de l'acide acétique, du peroxyde d'hydrogène et de l'eau dans des proportions quelconques qui sont fonction de leur état d'équilibre et de leur utilisation ultérieure.

En général, les compositions selon l'invention se caractérisent par une concentration pondérale en acide peracétique qui ne descend pas en dessous de 1 %. On travaille le plus souvent à des concentrations pondérales en acide peracétique ne dépassant pas 40 % de la composition.

En général, les compositions selon l'invention possèdent une teneur d'au moins 0,1 % en poids d'oxygène actif. Le plus souvent, cette teneur ne dépasse pas 20 %.

Par ailleurs, les compositions selon l'invention contiennent généralement au moins 0,005 % en poids d'un ou plusieurs stabilisants. Le plus souvent, cette concentration ne dépasse pas 5 %.

En particulier, les compositions selon l'invention contiennent avantageusement au moins 0,005 % en poids d'un ou plusieurs agents séquestrants. De préférence, cette concentration ne dépasse pas 5 %. De même, les compositions selon l'invention contiennent avantageusement au moins 0,0005 % en poids d'un ou plusieurs capteurs de radicaux libres. De préférence, cette concentration ne dépasse pas 0,05 %.

Les concentrations respectives en agent épaississant et en stabilisant sont choisies et peuvent être adaptées en fonction notamment de la teneur en peroxyde de la composition, de son pH, de la température et de la dilution lors de l'utilisation.

Les compositions selon l'invention peuvent être préparées par divers procédés.

La présente invention concerne également un procédé pour l'obtention de compositions d'acide peracétique épaissies et stabilisées, selon lequel on incorpore dans une solution d'acide peracétique successivement au moins un stabilisant choisi parmi les agents séquestrants, et au moins un stabilisant choisi parmi les capteurs de radicaux libres butylhydroxytoluènes et les mélanges contenant deux ou plus de ces produits, puis au moins un agent épaississant.

En pratique, dans une première étape, on incorpore les stabilisants dans la solution d'acide peracétique en maintenant avantageusement une agitation modérée qui assure une turbulence suffisante et améliore l'homogénéité du mélange. Ensuite, lorsque l'on ajoute le ou les agents épaississants, il est préférable d'augmenter progressivement l'agitation afin de maintenir un vortex malgré l'épaississement de la composition.

Le procédé selon l'invention offre l'avantage de fournir des compositions épaissies et stabilisées par simple mélange à température ambiante, sans qu'aucun traitement thermique ou autre ne soit requis. L'incorporation des stabilisants avant épaississement facilite l'homogénéisation du mélange sans en compromettre la stabilité ultérieure.

La présente invention fournit des compositions épaissies qui sont, notamment par le choix et la combinaison des agents épaississants et des stabilisants, remarquablement stables. Elles peuvent conserver leurs caractéristiques essentielles de teneur en oxygène actif et de viscosité au terme d'un stockage de longue durée à température ambiante. Grâce à leurs propriétés, elles conviennent particulièrement bien pour des utilisations en blanchiment ou désinfection de gros volumes difficilement immersibles en cuve, pour le traitement bactéricide de surfaces non horizontales notamment en milieu hospitalier ou industriel et pour la détergence ou le blanchiment à basse température.

Les exemples non limitatifs donnés ci-après ont pour objet d'illustrer l'invention, sans en restreindre la portée.

Pour tous les exemples, la solution initiale est une solution contenant, en poids, 15 % d'acide peracétique, 14 % de peroxyde d'hydrogène, approximativement 28 % d'acide acétique et approximativement 43 % d'eau à laquelle on a ajouté 1 % d'une solution (à environ 60 %) d'acide 1-hydroxyéthylidène-1,1-diphosphonique de marque DEQUEST 2010. Cette solution initiale possède une teneur totale en oxygène actif d'environ 98 g/kg.

Dans les exemples, la fluidité de la composition a été mesurée par un fluidimètre MATTHIS.

### Exemple 1 (non conforme à l'invention)

Cet exemple concerne une solution de départ diluée afin d'obtenir une teneur en oxygène actif de 25 g/kg.

Dans un bécher de forme étroite, on a placé 400 ml de cette solution diluée. Sans ajouter de stabilisants, on a incorporé pour épaissir la solution 3,5 % en poids d'acide polyacrylique réticulé avec un polyallyle sucrose, sous forme solide, de poids moléculaire approximativement égal à 3000000, de marque CARBOPOL 934. Cette introduction a été faite lentement, afin d'éviter la formation de grumeaux, sous une turbulence modérée maintenue par un agitateur à pales en croix dont la vitesse est augmentée au fur et à mesure de l'épaississement.

La composition épaissie n'a pas été neutralisée.

L'indice Matthis obtenu pour la composition selon cet exemple était inférieur à 0,5 cm/10 s, indiquant clairement le résultat de l'épaississement selon l'invention.

Ensuite, cette composition a été stockée à une température de 25°C durant 12 semaines.

A ce moment, l'indice Matthis de la composition était de 15 cm/10 s. Une mesure du pouvoir oxydant total par titrimétrie à l'hyposulfite de sodium (iodométrie classique) a révélé une perte de 19 % de teneur en oxygène actif (AVOX).

### Exemple 2 (conforme à l'invention)

Dans une solution identique à celle de l'exemple 1, on a ajouté avant épaississement deux stabilisants selon l'invention.

Pour ce faire, sous une turbulence assurée par un agitateur à pales en croix, on a incorporé 0,03 % en poids d'une solution contenant 50 % d'acide diéthylène triamine penta(méthylène phosphonique), de marque SEQUION 40H50, ayant une teneur en chlorures inférieure à 0,05 g par litre de solution ainsi que 0,03 % en poids d'un capteur de radicaux libres, le 2,6-bis-tertiobutyl-4-méthylphénol, de marque IONOL CP.

Lorsque les stabilisants ont été dissous, on a épaissi de la même manière que dans l'exemple 1.

Après fabrication, la composition présentait un indice Matthis inférieur à 0,5 cm/10 s.

Ensuite, cette composition a été stockée, comme dans l'exemple 1, à une température de 25°C, durant 12 semaines.

A ce moment, l'indice Matthis de la composition était inférieur à 0,5 cm/10 s et la diminution du pouvoir oxydant était de 4 % AVOX.

### Exemple 3 (conforme à l'invention)

Cet exemple concerne la composition de l'exemple 2, après 25 semaines de stockage à une température de 25°C.

A ce moment, l'indice Matthis mesuré était de 4 cm/10 s et la diminution du pouvoir oxydant était de 9 % AVOX.

L'examen comparatif des résultats des exemples 2 et 3 par rapport à ceux de l'exemple 1 illustre l'efficacité de l'incorporation combinée d'un agent séquestrant et d'un capteur de radicaux libres, tant en ce qui concerne le maintien de la forme épaissie que celui de la teneur en oxygène actif.

### Exemple 4 (non conforme à l'invention)

Cet exemple concerne une solution de départ diluée afin d'obtenir une teneur en oxygène actif de 5 g/kg puis épaissie conformément à l'exemple 1, sans incorporation de stabilisant.

Ensuite, cette composition a été stockée à une température de 35°C durant 28 semaines.

A ce moment, elle avait retrouvé sa forme parfaitement fluide (indice Matthis supérieur à 30 cm/10 s).

### Exemple 5 (conforme à l'invention)

Dans une solution identique à celle de l'exemple 4, on a ajouté avant épaississement trois stabilisants selon l'invention.

Pour ce faire, sous une turbulence assurée par un agitateur à pales en croix, on a incorporé 0,005 % en poids d'une solution neutralisée contenant 25 % sous forme d'acide diéthylène triamine penta(méthylène-phosphonique), de marque DEQUEST 2066, ayant une teneur en chlorures inférieure à 5 % en poids, 0,03 % en poids d'acide dipicolinique et 0,03 % en poids de 2,6-bis-tertiobutyl-4-méthylphénol, de marque IONOL CP.

Ensuite, cette composition a été stockée à une température de 35°C durant 28 semaines.

A ce moment, l'indice Matthis de la composition était de 1 cm/10 s et la diminution de pouvoir oxydant était de 3 % AVOX.

L'examen comparatif des résultats des exemples 4 et 5 illustre l'efficacité de l'incorporation combinée de 3 stabilisants.

## Revendications

1. Compositions d'acide peracétique, stables au stockage contenant au moins un agent épaississant, caractérisées en ce qu'elles contiennent au moins un stabilisant choisi parmi les agents séquestrants et au moins un stabilisant choisi parmi les capteurs de radicaux libres butylhydroxytoluènes.

2. Compositions selon la revendication 1, caractérisées en ce que l'agent épaississant est un polymère d'acide acrylique réticulé.

3. Compositions selon l'une quelconque des revendications 1 ou 2, caractérisées en ce qu'elles contiennent de 0,05 à 10 % en poids d'un ou plusieurs agents épaississants.

4. Compositions selon l'une quelconque des revendications 1 à 3, caractérisées en ce que leur fluidité ne dépasse pas un indice de Matthis de 15 cm/10 s et dont la perte d'oxygène actif au stockage est inférieure à 19 % de leur teneur initiale après 12 semaines à 25 °C.

5. Compositions selon l'une quelconque des revendications 1 à 4, caractérisées en ce que l'agent séquestrant est choisi parmi les acides phosphoniques, les acides carboxyliques azotés, leurs dérivés et les mélanges contenant deux ou plus de ces produits.

6. Compositions selon l'une quelconque des revendications 1 à 5, caractérisées en ce qu'elles contiennent de 1 à 40 % en poids d'acide peracétique.

7. Compositions selon l'une quelconque des revendications 1 à 6, caractérisées en ce qu'elles contiennent de 0,1 à 20 % en poids d'oxygène actif et de 0,005 à 5 % en poids de stabilisants.

8. Procédé pour l'obtention de compositions d'acide peracétique selon l'une quelconque des revendications 1 à 7, caractérisé en ce qu'on incorpore dans une solution d'acide peracétique successivement au moins un stabilisant choisi parmi les agents séquestrants et au moins un stabilisant choisi parmi les capteurs de radicaux libres, puis au moins un agent épaississant.

## Claims

1. Storage stable peracetic acid compositions containing at least one thickening agent, characterized in that they contain at least one stabilizer chosen from sequestring agents and at least one stabilizer chosen from butylhydroxytoluene free-radical scavengers.

2. Compositions according to Claim 1, characterized in that the thickening agent is a crosslinked acrylic acid polymer,

3. Compositions according to either of Claims 1 and 2, characterized in that they contain from 0>05 to 10% by weight of one or more thickening agents.

4. Compositions according to any one of Claims 1 to 3, characterized in that their fluidity does not exceed a Matthis value of 15 cm/10 s and in that their loss of active oxygen on storage is less than 19% of their initial content after 12 weeks at 25°C.

5. Compositions according to any one of Claims 1 to 4, characterized in that the sequestering agent is chosen from phosphonic acids, nitrogenous carboxylic acids, their derivatives and mixtures containing two or more of these products.

6. Compositions according to any one of Claims 1 to 5, characterized in that they contain from 1 to 40% by weight of peracetic acid,

7. Compositions according to any one of Claims 1 to 6, characterized in that they contain from 0.1 to 20 % by weight of active oxygen and from 0,005 to 5% by weight of one or more stabilizers,

8. Process for obtaining peracetic acid compositions according to any one of Claims 1 to 7, characterized in what at least one stabilizer chosen from sequestering agents and at least one stabilizer chosen from free-radical scavengers, followed by at least one thickening agent, are successively incorporated into a solution of peracetic acid.

## Patentansprüche

1. Lagerungsstabile Zusammensetzungen von Peressigsäure, enthaltend wenigstens ein Verdickungsmittel dadurch gekennzeichnet, daß sie wenigstens ein Stabilisierungsmittel, ausgewählt unter den Sequestriermitteln und wenigstens ein Stabilisierungsmittel, ausgewählt unter den Butylhydroxytoluol Fängern von freien Radikalen enthalten.

2. Zusammensetzungen nach Anspruch 1, dadurch gekennzeichnet, daß das Verdickungsmittel ein vernetztes Acrylsäurepolymer ist.

3. Zusammensetzungen nach einem der Ansprüche 1 oder 2, dadurch gekennzeichnet, daß sie 0,05 bis 10 Gew`-% eines oder mehrerer Verdickungsmittel enthalten.

4. Zusammensetzungen nach einem der Ansprüche 1 bis 3, dadurch gekennzeichnet, daß ihre Fluidität eine Matthis-Zahl von 15 cm/10 s nicht übersteigt und deren Aktivsauerstoffverlust bei Lagerung weniger als 19% ihres anfänglichen Gehalts nach 12 Wochen bei 25° C ist.

5. Zusammensetzungen nach einem der Ansprüche 1 bis 4, dadurch gekennzeichnet, daß das Sequestriermittel ausgewählt ist unter den Phosphonsäuren, den stickstoffhaltigen Carbonsäuren, deren Derivaten und den Mischungen enthaltend zwei oder mehrere dieser Produkte.

6. Zusammensetzungen nach einem der Ansprüche 1 bis 5, dadurch gekennzeichnet, daß sie 1 bis 40 Gew.-% Peressigsäure enthalten.

7. Zusammensetzungen nach einem der Ansprüche 1 bis 6, dadurch gekennzeichnet, daß sie 0,1 bis 20 Gew.-% aktiven Sauerstoff und 0,005 bis 5 Gew.-% eines oder mehrerer Stabilisierungsmittel enthalten.

8. Verfahren zum Erhalt von Peressigsäure-Zusammensetzungen gemäß einem der Ansprüche 1 bis 7, dadurch gekennzeichnet, daß man zu einer Peressigsäurelösung nacheinander wenigstens ein Stabilisierungsmittel, ausgewählt unter den Sequestriermitteln und wenigstens ein Stabilisierungsmittel, ausgewählt unter den Fängern von freien Radikalen und den Mischungen enthaltend zwei oder mehrere dieser Produkte, dann wenigstens ein Verdickungsmittel zufügt.
